# EUROPEAN PATENT APPLICATION

(11) **EP 4 197 808 A1**
(43) Date of publication of application: **21.06.2023**
(21) Application number: 22212403.4
(22) Date of filing: 09.12.2022
(51) Int. Cl.: B60C 7/14, B60B 9/26, B29D 30/02

(54) **NON-PNEUMATIC TIRE WITH REINFORCED SHEET-LIKE SPOKES**

(30) Priority: 17.12.2021 US 202117554236
(71) Applicant: The Goodyear Tire & Rubber Company, Akron, OH 44316 (US)
(72) Inventor: HINQUE, Daniel Paul Luc Marie, B-6720 Habay-la-Neuve (BE)
(74) Representative: Kutsch, Bernd

(57) **Abstract**

A non-pneumatic tire (100) is disclosed comprising a radially inner ring (102) for contacting a vehicle rim; a radially outer ring (104); a support structure (106) including spokes (108) extending from the radially outer ring (104) to the radially inner ring (102), the support structure (106) being effective to transfer load from the radially inner ring (102) to the radially outer ring (104), the spokes (108) delimiting openings (120) in the support structure (106), the openings (120) extending in a width direction of the non-pneumatic tire (100); and a reinforcement structure comprising loops (118) of reinforcement cord, each loop (118) extending around one of the openings (120). Each spoke (108) has arranged therein radial reinforcement cord segments (118a, 118c) extending radially between the inner ring (102) and the outer ring (104), the radial reinforcement cord segments (118a, 118c) being lined up along the width direction of the non-pneumatic tire (100), and wherein along the width direction, the reinforcement cord segments (118a, 118c) in a spoke (108) belong alternately to a loop (118) extending around an opening (120) on a first side of the spoke (108) and to a loop (118) extending around an opening (120) on a second side of the spoke (108).

## Description

### Background of the Invention

The present invention generally relates to vehicle tires and, more particularly, to non-pneumatic tires based on reinforced rubber.

The pneumatic tire has been the solution of choice for vehicular mobility for over a century and is still dominant on the tire market today. Pneumatic tires are efficient at carrying loads because all of their structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid (e.g., air or an inert gas). A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. So-called "bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

US 2017/0297371 A1 discloses a non-pneumatic tire, which includes a ground contacting annular tread portion, a shear band, and a connecting web positioned between a hub and the shear band. US 2017/0297371 A1 specifically relates to the shear band, which is preferably comprised of a three-dimensional spacer fabric having a first and second layer connected by connecting members. The three-dimensional spacer fabric has a defined depth. The three-dimensional spacer structure further includes a plurality of cells formed between the connecting members, and wherein one or more of the cells are filled with a filler material. The filler material may be foam or a thermoplastic elastomer.

The purpose of a shear band is to transfer the load from contact with the ground through tension in the spokes to the hub, creating a top loading structure. When the shear band deforms, its preferred form of deformation is shear over bending. The shear mode of deformation occurs because of the inextensible membranes located on the outer portions of the shear band. Non-pneumatic tires may have a shear band made from rubber materials sandwiched between two or more layers of inextensible belts or membranes. One may find disadvantages in such sandwich construction, which is the reason why alternatives are investigated.

WO 2021/061323 A1 relates to a non-pneumatic tire having a looped support structure. The proposed non-pneumatic tire includes an inner ring, an outer ring, and a plurality of loops extending between the inner ring and the outer ring. The plurality of loops includes at least a first loop and a second loop, the first and second loops being each in direct contact with both the inner ring and the outer ring. The first loop has a single reinforcement layer disposed therein and includes a first extent that extends between the inner ring and the outer ring and a second extent that extends between the inner ring and the outer ring. The second loop has a single reinforcement layer disposed therein and includes a third extent that extends between the inner ring and the outer ring and a fourth extent that extends between the inner ring and the outer ring. The second extent is in direct contact with the third extent. In other words, the loops are placed one adjacent the other in the annular section between the inner and outer rings and spokes are formed by the radial extents of two adjacent loops.

### Summary of the Invention

The invention relates to a non-pneumatic tire in accordance with claim 1 or 11.

Dependent claims refer to preferred embodiments of the invention.

According to one aspect of the invention, a non-pneumatic tire comprises a radially inner ring for contacting a vehicle rim, a radially outer ring and a support structure including spokes extending from the radially outer ring to the radially inner ring. The support structure is effective to transfer load from the radially inner ring to the radially outer ring. The spokes delimit openings in the support structure, which extend in a width direction (transversal direction) of the non-pneumatic tire. The non-pneumatic tire further comprises a reinforcement structure. The reinforcement structure comprises loops of reinforcement cord, each loop extending around one of the openings. Each spoke has arranged therein radial reinforcement cord segments extending radially between the inner ring and the outer ring. The radial reinforcement cord segments are lined up parallel to one another along the width direction of the non-pneumatic tire. Along the width direction, the reinforcement cord segments in a spoke belong alternately to a first loop extending around an opening on a first side of the spoke and to a second loop extending around an opening on a second side of the spoke, opposite to the first side.

According to a preferred embodiment, each spoke has the radial reinforcement cord segments lined-up therein in a single reinforcement layer. The radial reinforcement cord segments may form a substantially coplanar arrangement in each spoke.

According to a preferred embodiment, each spoke has a median surface and the radial reinforcement cord segments lined-up therein in the median surface. As used herein, the expression "median surface" designates the locus of points that are equidistant from the side surfaces that delimit the openings on either side of the spoke. The radial reinforcement cord segments could, more generally speaking, be lined-up in an internal surface of each spoke. Such internal surface could be substantially parallel to the median surface or correspond to the locus of points that are a given distance away from one of the surfaces that delimit the openings on either side of the spoke, or to the locus of points whose distance from one of the surfaces that delimit the openings on either side of the spoke amounts to a predefined percentage of the distance from the one of the surfaces.

The spokes may be planar. According to a preferred embodiment, however, the spokes are curved. In particular, the spokes may all be curved in the same angular direction about the tire axis, so that they deflect in the same direction when the tire is loaded.

According to a preferred embodiment, each loop of the reinforcement structure comprises: a first radial reinforcement cord segment extending within a first spoke from the inner ring to the outer ring; an outer arc reinforcement cord segment extending within the radially outer ring from the first spoke to a second spoke that is an immediate neighbor of the first spoke; a second radial reinforcement cord segment extending within the second spoke from the outer ring to the inner ring; and an inner arc reinforcement cord segment extending within the radially inner ring from the second spoke to the first spoke.

The loops could be closed loops. In this case, the loops extending around a given opening could be arranged in parallel planes perpendicular to the tire axis. The loops extending around the neighboring openings would then be arranged between those planes, e.g., midway between those planes.

According to a preferred embodiment, the reinforcement structure comprises windings, each winding extending around one of the openings, the loops being part of the windings. Each loop may form at least one turn of a such a winding.

The windings could all have the same chirality (handedness). Preferably, however, the windings include both left-handed and right-handed windings. According to an embodiment, in an angular direction about the tire axis, the left-handed windings alternate with the righthanded windings. Using windings of alternating handedness may be beneficial for improved dimensional stability of the tire.

According to a preferred embodiment, the radial reinforcement cord segments are perpendicular to the tire axis. Alternatively, the radial reinforcement cord segments could be slanted with respect to the tire axis.

According to a preferred embodiment, the radially outer ring includes a shear band and a tread.

According to a preferred embodiment the radially inner ring, the radially outer ring and the support structure consist essentially of reinforced rubber.

According to another aspect of the invention, a non-pneumatic tire comprises: a radially inner ring extending around the tire axis, for contacting a vehicle rim; a radially outer ring extending around the tire axis; a support structure including spokes extending from the radially outer ring to the radially inner ring, the support structure being effective to transfer load from the radially inner ring to the radially outer ring, the spokes delimiting openings in the support structure, the openings extending along the tire axis; and a reinforcement structure comprising reinforcement cord arranged in windings, each winding extending around one of the openings and comprising: a first radial section extending within a first spoke from the inner ring to the outer ring, an outer arc section extending within the radially outer ring from the first spoke to a second spoke that is an immediate neighbor of the first spoke, a second radial section extending within the second spoke from the outer ring to the inner ring, and an inner arc section extending within the radially inner ring from the second spoke to the first spoke.

Neighboring windings are preferably arranged so as to interdigitate with one another within the spokes. The depth of the interdigitation (in the circumferential direction) preferably corresponds to the thickness of the reinforcement cord.

As for the first aspect, the radially outer ring may include a shear band and a tread. The spokes may be planar. Alternatively, the spokes may be curved. In particular, the spokes may all be curved in the same angular direction about the tire axis, so that they deflect in the same direction when the tire is loaded.

According to a preferred embodiment, each of the first radial section, the outer arc section, second radial section and the inner arc section comprises plural parallel segments of reinforcement cord. In particular, the first radial section may comprise plural parallel first radial reinforcement cord segments extending from the inner ring to the outer ring, the outer arc section may comprise plural parallel outer arc reinforcement cord segments extending from the first spoke to the second spoke, the second radial section may comprise plural parallel second radial reinforcement cord segments extending from the outer ring to the inner ring and the inner arc section may comprise plural inner arc reinforcement cord segments extending from the second spoke to the first spoke.

As used herein, the expression "to interdigitate" may mean that within the spokes, neighboring windings are arranged interleaved, in such a way that, along the direction of the tire axis, there is a zone of overlap containing alternatingly a turn of either winding. In particular, the plural parallel first radial reinforcement cord segments of a winding may be arranged alternatingly with the plural parallel second radial reinforcement cord segments of a neighboring winding.

The windings may have the same pitch. The pitch is preferably constant along the direction of the tire axis. Alternatively, the pitch of the windings could change as a function of a coordinate on the tire axis. This would lead to variable amount of reinforcement, in particular to variably spaced radial reinforcement cord segments. Windings with non-constant pitch could thus be used to specifically tailor the mechanical properties of the spokes.

According to a preferred embodiment, where the neighboring windings interdigitate, the neighboring windings are regularly spaced along the direction of the tire axis. Preferably, neighboring windings interdigitate with one another in the median surface of the spoke.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### Brief Description of the Drawings

The invention will be described by way of example and with reference to the accompanying drawings in which:
FIG. 1 is a perspective schematic view of a non-pneumatic tire according to an embodiment comprising planar sheet-like reinforced spokes;
FIG. 2 is a cross section perpendicular to the tire axis of a part of the non-pneumatic tire of FIG. 1;
FIG. 3 is a view of the cross section III-III of FIG. 2, representing the median surface of a spoke;
FIG. 4 is a perspective illustration of a step of the tire manufacturing process;
FIG. 5 is a perspective view of a mold core wrapped in a layer of green tire material around which reinforcement cord has been wound;
FIG. 6 is a perspective view of a right-handed winding of reinforcement cord;
FIG. 7 is a perspective view of a left-handed winding of reinforcement cord;
FIG. 8 is a cross section perpendicular to the tire axis of a part of a non-pneumatic tire having curved spokes; and
FIG. 9 is a perspective view of two neighboring windings of reinforcement cord in interdigitating configuration, the illustrated windings being shaped for curved spokes as depicted in FIG. 8.

### Detailed Description of Preferred Embodiments of the Invention

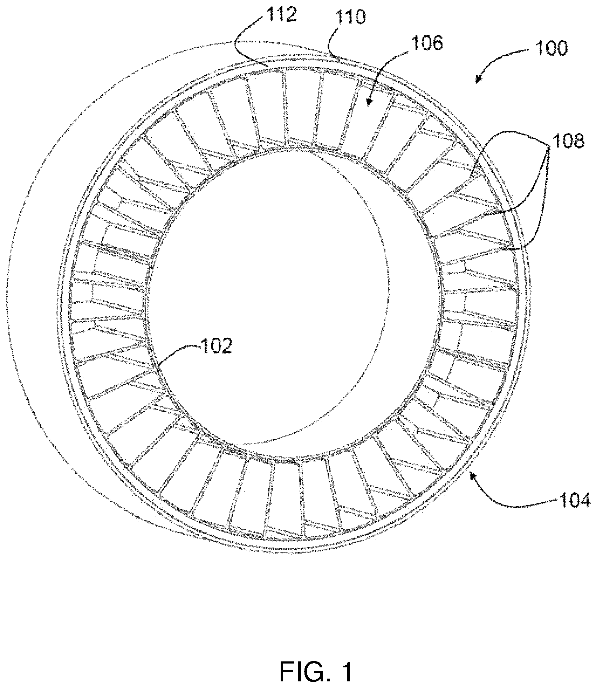

FIG. 1 shows a non-pneumatic tire 100 according to an embodiment. The non-pneumatic tire 100 is of the top-loader type and includes an inner ring 102, an outer ring 104 and a support structure 106 with spokes 108 extending from the inner ring to the outer ring. The inner ring 102 has a first diameter, and the outer ring 104 has a second diameter greater than the first diameter. The inner and outer rings 102, 104 are substantially coaxial with each other and centered on the tire axis.

The inner ring 102 may be mounted on a hub or rim (not shown). The outer ring 104 may include a circumferential tread 110 and a shear band 112. The tread 110 may include tread features such as, e.g., grooves, ribs, blocks, lugs, sipes, studs, etc. The shear band 112 receives the load exerted on the inner ring as tension in the spokes 108 and transfers this load to the ground, via the tread.

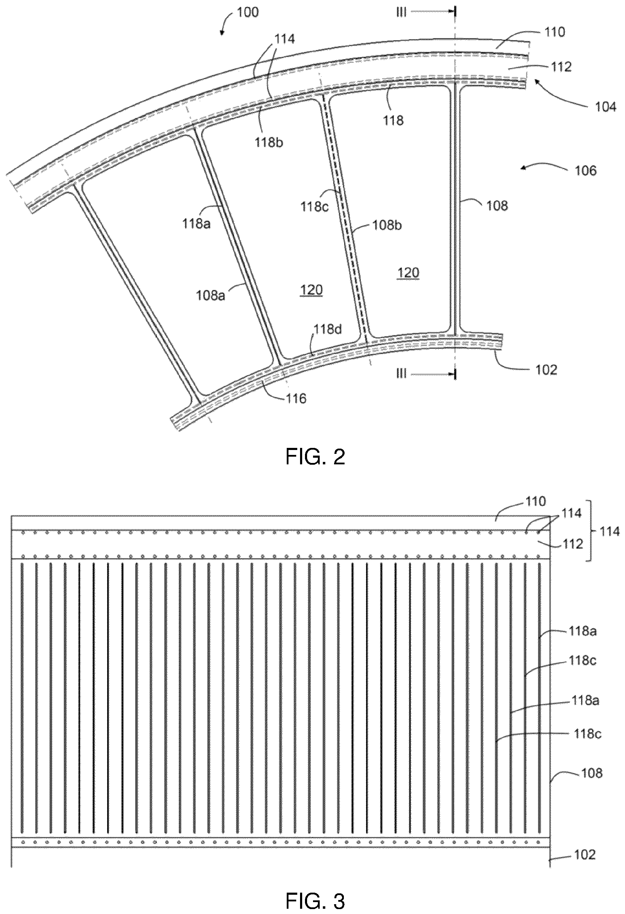

FIG. 2 is an enlarged detail of the non-pneumatic tire of FIG. 1 shown in a cross-section perpendicular to the tire axis. As can be seen in this view, the non-pneumatic tire 100 comprises different types of reinforcement. For instance, the shear band 112 may comprise shear band cords 114 extending in circumferential direction. The inner ring 102 may also comprise reinforcement cords 116 extending in the circumferential direction. The support structure 106 is made of reinforced rubber and comprises loops 118 of reinforcement cord, each loop 118 extending around one opening 120 formed between the spokes 108. Each opening 120 extends in the width direction of the tire, i.e., the direction of the tire axis. The openings 120 may be visible from the sides of the tire or concealed by a cover (not shown).

The reinforcement may be made of steel cords and/or cords formed from nylon fiber, polyester fiber, fiber glass, carbon fiber, aramid fiber, glass fiber, polyethylene fiber, polyethylene terephthalate fiber, or other reinforcement materials. Different reinforcement materials could be combined. It is worthwhile noting that a "cord" may include one or plural strands.

As can be seen in FIG. 2, each loop 118 of the reinforcement structure 106 comprises a first radial reinforcement cord segment 118a extending within a first spoke (e.g., spoke 108a in FIG. 2) from the inner ring 102 to the outer ring 104, an outer arc reinforcement cord segment 118b extending within the outer ring 104 from the first spoke 108a to a second spoke 108b that is an immediate neighbor of the first spoke 108a, a second radial reinforcement cord segment 118c extending within the second spoke 108b from the outer ring 104 to the inner ring 102, and an inner arc reinforcement cord segment 118d extending within the radially inner ring 102 from the second spoke 108b to the first spoke 108a.

Each loop 118 is continuous but not necessarily closed. According to a preferred embodiment, each loop around a given opening is connected to a series of loops around that opening, such that the series of loops forms a winding around that opening. Each loop may correspond to a turn of the winding.

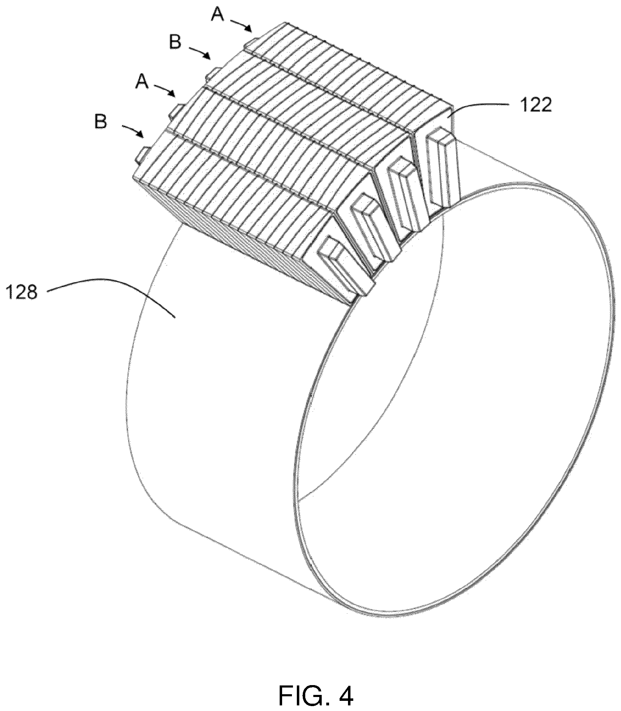

As shown in FIG. 3, each spoke 108 has arranged therein radial reinforcement cord segments 118a, 118c extending between the inner ring 102 and the outer ring 104. Along the width direction of the non-pneumatic tire, the radial reinforcement cord segments 118a, 118c are lined up parallel to one another. Along the width direction, the reinforcement cord segments in a spoke belong alternately to a first loop extending around an opening on a first side of the spoke and to a second loop extending around an opening on a second side of the spoke, opposite to the first side. In other words, of the reinforcement cord segments 118a, 118c shown in FIG. 3, every second segment belongs to a loop in front of the plane of the drawing, whereas the other segments belong to loops behind the plane of the drawing. According to a preferred embodiment, both sets of loops may form a respective winding. Such an embodiment is set out in more detail with reference to FIGS. 4-7, which illustrate a possible way of manufacturing the support structure of a non-pneumatic tire according to an aspect of the invention.

The manufacturing process may comprise assembling different preformed pieces of uncured tire material, e.g., green rubber, in a mold comprising different parts. The mold may then be heated to an elevated temperature sufficient to cure the tire material. In case of green rubber, the combination of elevated temperatures and high pressure causes vulcanization of the rubber. When the tire material is cured, the mold is disassembled, and the cured tire is removed from it.

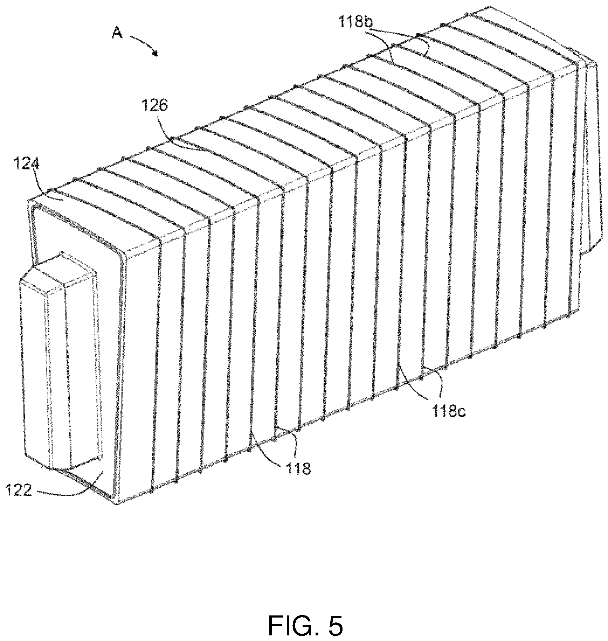

FIG. 4 illustrates how the spokes 108 may be manufactured. For each opening of the support structure 106, a core 122 is provided. FIG. 5 shows such a core in more detail. Each core 122 is wrapped with one or more layers of green (i.e., uncured) rubber 124. Then, the loops of reinforcement cord are arranged on the layers of green rubber 124. This step may be effected by winding reinforcement cord around the core 122 with the one or more layers of green rubber 124. FIG. 5 shows such a winding 126 consisting of several individual loops 118, each loop 118 forming a turn of the winding 126. Turning back to FIG. 4, the cores 122 with the wrapped-around green rubber and reinforcement cord are assembled on a base of green rubber 128, which is to become part of the inner ring. The cores 122 are arranged with their lateral faces contacting one another and gently pressed together. The radial reinforcement cord segments 118a or 118c on a lateral face of a core 122 are spaced from each other in the direction of the tire axis. In case of windings with a constant pitch, the spacing between the radial reinforcement cord segments 118a (of the same winding) corresponds to the pitch less the thickness of the reinforcement cord. When the cores 122 are assembled around the tire axis, the radial reinforcement cord segments 118a of a given core 122 are staggered with the radial reinforcement cord segments 118c of the neighboring core. To enable the staggered arrangement, the radial reinforcement cord segments on the adjacent face of the neighboring core are offset with respect to the radial reinforcement cord segments on the core under consideration. The radial reinforcement cord segments on the adjacent face of the neighboring core may, for instance, be centered on the gaps between the radial reinforcement cord segments on the core under consideration. If the radial reinforcement cord segments are parts of windings with a constant pitch, the offset thus preferably amounts to approximately half the pitch. In each spoke, all the radial reinforcement cord segments are located in substantially the same layer. This implies that the geometrical projections of the radial reinforcement cord segments 118a, 118c along the direction of the tire axis essentially coincide. If the cores 122 are wrapped with the same thickness of green rubber 124, the radial reinforcement cord segments are located substantially in the median surface of the spoke. Off-median arrangement of the radial reinforcement cord segments may be obtained by wrapping neighboring mold cores 122 with green rubber of different thickness. If the one or more layers of green rubber 124 contain no further reinforcement embedded therein (this can be an option), each spoke 108 comprises a single layer of reinforcement consisting of the cords of the two adjacent windings.

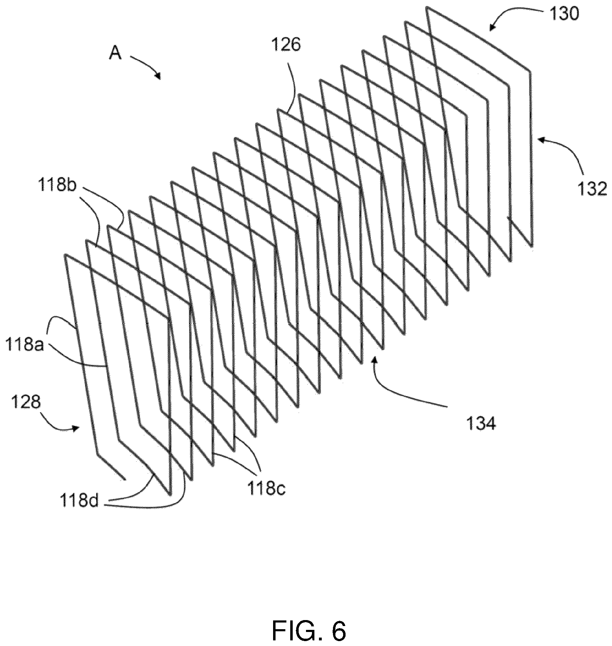

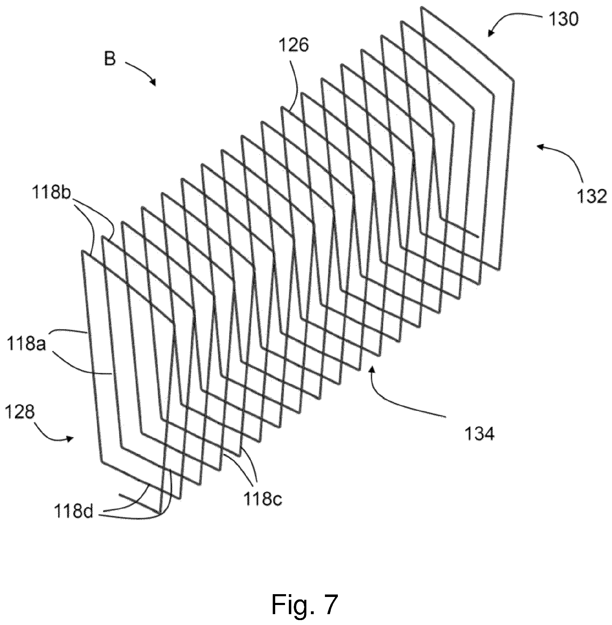

In the embodiment illustrated in FIG. 4, the windings 126 of reinforcement cord are of two types, designated "A" and "B", which alternate in angular direction around the tire axis. The A windings are right-handed or dextral (see also FIGS. 5 and 6), whereas the B windings are left-handed or sinistral (see also FIG. 7). As can be seen in FIG. 4 and 5, the outer arc reinforcement cord segments 118b of each winding are slightly slanted with respect to the plane normal to the tire axis. For the B windings, the slant angle of the outer arc reinforcement cord segments 118b is opposite to the slant angle of the outer arc reinforcement cord segments of the A windings. Although not shown in FIGS. 4 and 5, also the inner arc reinforcement cord segments 118d may have such a slant angle with respect to the plane normal to the tire axis. The alternately slanted inner and outer arc segments may contribute to an overall balanced rolling motion and to improved resistance to torsional moments transferred from the shear band to the support structure and the inner ring.

FIGS. 5 and 6 show a right-handed and a left-handed winding of reinforcement cord, respectively, without the core and the rubber layer(s) on which it is wound up. Each winding 126 comprises four sections 128, 130, 132 134, each section corresponding to a face of the core 122. Specifically, each winding comprises a first radial section 128, an outer arc section 130, a second radial section 132 and an inner arc section 134. Each of these sections comprises plural parallel segments of reinforcement cord. The first radial section 128 comprises the first radial reinforcement cord segments 118a configured to extend from the inner ring to the outer ring. The outer arc section 130 comprises the outer arc reinforcement cord segments 118b configured to extend from one spoke to the next neighbor spoke. The second radial section 132 comprises the second radial reinforcement cord segments 118c configured to extend from the outer ring to the inner ring. The inner arc section 134 comprises the inner arc reinforcement cord segments 118d configured to extend from the next neighbor spoke back to the spoke with the first radial reinforcement cord segments 118a.

It is worthwhile noting that, in alternative embodiments of the invention, the support structure may be built with windings having all the same chirality (handedness), provided that in such windings the second radial reinforcement cord segments 118c of the second radial section 132 are offset (preferably by a distance equal to approximately half the pitch) in the direction of the tire axis with respect to the first radial reinforcement cord segments 118a of the first radial section 128.

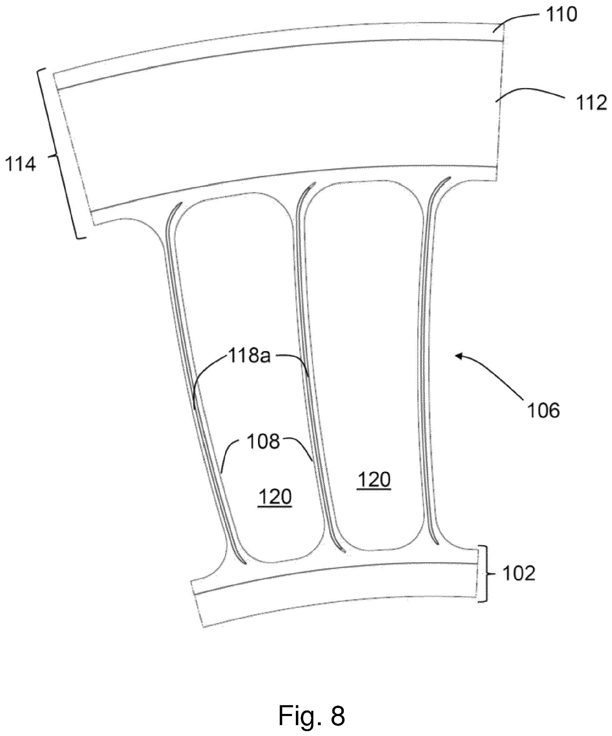

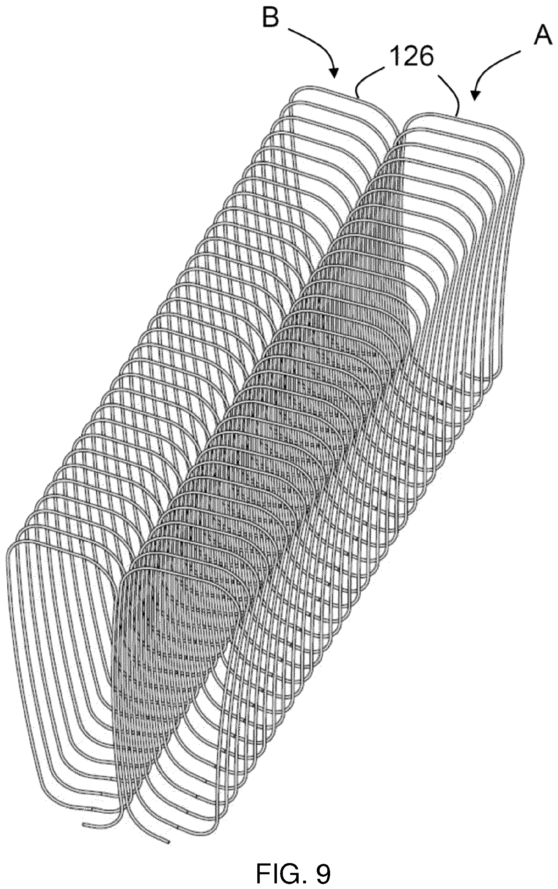

FIGS. 8 and 9 relate to an embodiment of a non-pneumatic tire 100, which differs from the one described with reference to FIGS. 1 to 7 in that the spokes 108 are slightly curved in the same angular direction about the tire axis. The curved configuration of the spokes 108 ensures that they normally deflect in the same direction when the tire is loaded. The support structure 106 may be built in the same manner as illustrated in FIG. 4, with the exception that cores having a convex and a concave lateral face are used.

FIG. 9 shows examples of windings of reinforcement cord around two openings adjacent a spoke. The spoke is located where the two adjacent windings interdigitate. The windings 126 of FIG. 9 have opposite handedness. In the support structure, right-handed windings and left-handed windings alternate around the tire axis.

## Claims

1. A non-pneumatic tire comprising
a radially inner ring (102) for contacting a vehicle rim;
a radially outer ring (104);
a support structure (106) including spokes (108) extending from the radially outer ring (104) to the radially inner ring (102), the support structure (106) being effective to transfer load from the radially inner ring (102) to the radially outer ring (104), the spokes (108) delimiting openings (120) in the support structure (106), the openings (120) extending in a width direction of the non-pneumatic tire (100); and
a reinforcement structure comprising loops (118) of reinforcement cord, each loop (118) extending around one of the openings (120);
wherein each spoke (108) has arranged therein radial reinforcement cord segments (118a, 118c) extending radially between the inner ring (102) and the outer ring (104), the radial reinforcement cord segments (118a, 118c) being lined up along the width direction of the non-pneumatic tire (100), and wherein along the width direction, the reinforcement cord segments (118a, 118c) in a spoke (108) belong alternately to a loop (118) extending around an opening (120) on a first side of the spoke (108) and to a loop (118) extending around an opening (120) on a second side of the spoke (108).

2. The non-pneumatic tire of claim 1, wherein each spoke (108) has the radial reinforcement cord segments (118a, 118c) lined-up therein in a single reinforcement layer; and/or wherein each spoke (108) has a median surface and the radial reinforcement cord segments (118a, 118c) lined-up therein in the median surface.

3. The non-pneumatic tire of claim 1 or 2, wherein each spoke (108) is curved, and, optionally, wherein the non-pneumatic tire (100) has a tire axis and the spokes (108) are all curved in the same angular direction about the tire axis.

4. The non-pneumatic tire of at least one of the previous claims, wherein each loop (118) comprises:
a first radial reinforcement cord segment (118a) extending within a first spoke (108) from the inner ring (102) to the outer ring (104);
an outer arc reinforcement cord segment (118b) extending within the radially outer ring (104) from the first spoke (108) to a second spoke (108) that is an immediate neighbor of the first spoke (108);
a second radial reinforcement cord segment (118c) extending within the second spoke (108) from the outer ring (104) to the inner ring (102); and
an inner arc reinforcement cord segment (118d) extending within the radially inner ring (102) from the second spoke (108) to the first spoke (108).

5. The non-pneumatic tire of at least one of the previous claims, wherein the reinforcement structure comprises windings (126), each winding (126) extending around one of the openings (120), the loops (118) being part of the windings (126).

6. The non-pneumatic tire of claim 5, wherein each loop (118) forms at least one turn of a winding (126).

7. The non-pneumatic tire of claim 5 or 6, wherein the windings (126) include both left-handed and right-handed windings (126), and, optionally, wherein the non-pneumatic tire (100) has a tire axis, and wherein, in an angular direction about the tire axis, the left-handed windings alternate with the right-handed windings.

8. The non-pneumatic tire of at least one of the previous claims, wherein the radially outer ring (104) includes a shear band (112) and a tread (110).

9. The non-pneumatic tire of at least one of the previous claims, wherein the radially inner ring (102), the radially outer ring (104) and the support structure (106) consist essentially of reinforced rubber.

10. The non-pneumatic tire of at least one of the previous claims, the non-pneumatic tire (100) having a tire axis, wherein the radial reinforcement cord segments (118a, 118c) are perpendicular to the tire axis.

11. A non-pneumatic tire with a tire axis comprising:
a radially inner ring (102) extending around the tire axis for contacting a vehicle rim;
a radially outer ring (104) extending around the tire axis;
a support structure (106) including spokes (108) extending from the radially outer ring (104) to the radially inner ring (102), the support structure (106) being effective to transfer load from the radially inner ring (102) to the radially outer ring (104), the spokes (108) delimiting openings (120) in the support structure (106), the openings (120) extending along the tire axis;
a reinforcement structure comprising reinforcement cord arranged in windings (126), each winding (126) extending around one of the openings (120) and comprising: a first radial section (118a) extending within a first spoke (108) from the inner ring (102) to the outer ring (104); an outer arc section (118b) extending within the radially outer ring (104) from the first spoke (108) to a second spoke (108) that is an immediate neighbor of the first spoke (108); a second radial section (118c) extending within the second spoke (108) from the outer ring (104) to the inner ring (102); and an inner arc section (118d) extending within the radially inner ring (102) from the second spoke (108) to the first spoke (108); wherein neighboring windings (126) interdigitate with one another within the spokes (108).

12. The non-pneumatic tire of claim 11, wherein each of the first radial section (118a), the outer arc section (118b), second radial section (118c) and the inner arc section (118d) comprises plural parallel segments of reinforcement cord.

13. The non-pneumatic tire of claim 11 or 12, wherein the windings (126) have a same pitch; and/or wherein the neighboring windings (126) interdigitate; and/or wherein the neighboring windings (126) are regularly spaced from each other along the direction of the tire axis.

14. The non-pneumatic tire of at least one of the claims 11 to 13, wherein each spoke (108) has a median surface and wherein the neighboring windings (126) interdigitate with one another in the median surface; and/or wherein the spokes (108) are all curved in the same angular direction about the tire axis.

15. The non-pneumatic tire of at least one of the claims 11 to 14, wherein the radially outer ring (104) includes a shear band (112) and a tread (110).
